# DEMANDE DE BREVET EUROPEEN

(11) **EP 1 156 619 A2**
(43) Date de publication de la demande: **21.11.2001**
(21) Numéro de dépôt: 01401268.6
(22) Date de dépôt: 16.05.2001
(51) Int. Cl.: H04L 9/32, H04Q 7/32

(54) **Ensemble d'un téléphone cellulaire et de moyens de connexion à un réseau informatique**

(30) Priorité: 16.05.2000 GB 0011608
(71) Demandeur: SAGEM S.A., 75116 Paris (FR)
(72) Inventeur: Duong, Dan, 75005 Paris (FR)
(74) Mandataire: Bloch, Gérard

(57) **Abrégé**

Lors de chaque connexion au réseau informatique (30), l'ensemble fournit à un serveur de sécurité (4) un identifiant et un mot de passe associé. Le téléphone (1) comprend des moyens de sécurité (11) agencés pour, lors de chaque connexion au réseau informatique, générer un mot de passe, valide pour cette connexion, à partir d'au moins une variable, par exemple la date et l'heure, et d'un code confidentiel, et le fournir aux moyens (21) de connexion au réseau informatique.

## Description

Certains téléphones cellulaires peuvent être utilisés pour connecter à l'Internet un terminal, par exemple un ordinateur portable, équipé d'une application de connexion à l'Internet. En fonctionnement, on le relie au téléphone, par exemple par une liaison filaire, le téléphone connecte le terminal à l'Internet et, après connexion, le terminal peut naviguer sur l'Internet, envoyer ou recevoir des messages, par l'intermédiaire du téléphone. Dans ce cas, le téléphone joue le rôle d'un modem vis-à-vis du terminal.

Il existe également des téléphones cellulaires ayant des capacités Internet leur permettant de se connecter et de communiquer eux-mêmes à travers l'Internet.

Pour se connecter à un réseau informatique, par exemple à l'Internet, l'équipement (terminal ou téléphone) doit généralement exécuter un protocole de connexion téléphonique à un fournisseur d'accès à l'Internet. Ce protocole comprend une phase d'authentification, au cours de laquelle l'équipement fournit au fournisseur d'accès un identifiant et un mot de passe associé d'utilisateur. Le fournisseur d'accès, en coopération avec un serveur de sécurité, identifie l'équipement à l'aide de son identifiant et vérifie la validité du mot de passe.

Le mot de passe sert à sécuriser l'accès à l'Internet. Il existe différents niveaux de sécurité. Au niveau "0", l'identifiant n'est associé à aucun mot de passe. Au niveau "1", le mot de passe est fixe, immuable. Au niveau "2", le mot de passe est dynamique, change régulièrement

Dans le cas d'un mot de passe dynamique, changeant par exemple à chaque connexion à l'Internet, le serveur de sécurité et l'équipement doivent connaître le mot de passe d'utilisateur valide, lors de chaque connexion.

Pour cela, l'utilisateur peut utiliser une "calculatrice" de mots de passe, destinée à générer des mots de passe, à partir d'au moins une variable et d'un code confidentiel d'utilisateur, connu du serveur de sécurité, en utilisant un algorithme tel que celui défini par le protocole RADIUS (Remote authentication dial-in user service), également implémenté dans le serveur de sécurité. La calculatrice et le serveur de sécurité sont synchronisés, de façon à ce que le serveur de sécurité reconnaisse le mot de passe d'utilisateur valide, généré par la calculatrice, lors de chaque connexion.

Lorsque l'utilisateur souhaite connecter son ordinateur à l'Internet par l'intermédiaire de son téléphone cellulaire, il saisit son identifiant dans le terminal et active sa calculatrice, par appui sur une touche de mise en marche et saisie du code PIN du téléphone. La calculatrice génère alors un mot de passe à partir d'une ou de plusieurs variables, par exemple la date et l'heure, et du code confidentiel, puis affiche ce mot de passe. L'utilisateur prend connaissance du mot de passe et le saisit manuellement dans le terminal. Le terminal transmet ensuite l'identifiant et le mot de passe d'utilisateur à un serveur de sécurité, par l'intermédiaire du téléphone cellulaire et du fournisseur d'accès à l'Internet. Le serveur de sécurité détermine le mot de passe d'utilisateur valide pour cette connexion, associé à l'identifiant considéré, le compare à celui fourni par le terminal et, en cas de correspondance, autorise l'accès à l'Internet.

L'inconvénient de ce mode de sécurisation de l'accès à l'Internet réside dans le fait l'utilisateur est obligé de transporter avec lui non seulement le téléphone, mais également la calculatrice, ce qui est encombrant. En outre, l'utilisateur risque, par erreur, de saisir un mot de passe incorrect dans le téléphone.

La présente invention propose d'abord de pallier cet inconvénient.

A cet effet, l'invention concerne un ensemble d'un téléphone d'un réseau cellulaire et de moyens de connexion téléphonique à un réseau informatique, destinés, lors de chaque connexion au réseau informatique, à fournir à un serveur de sécurité un identifiant et un mot de passe associé, caractérisé par le fait que le téléphone comprend des moyens de sécurité agencés pour générer différents mots de passe, lors de différentes connexions au réseau informatique à partir d'au moins une variable et d'un code confidentiel.

L'invention consiste donc à avoir intégré la calculatrice dans le téléphone cellulaire.

La demanderesse a le mérite d'avoir relevé que les deux opérations, effectuées pour activer la calculatrice (appui sur une touche de mise en marche et saisie du code PIN), doivent également être effectuées pour mettre en marche le téléphone cellulaire. En intégrant la calculatrice dans le téléphone cellulaire, il suffit donc d'activer le téléphone pour également activer les moyens de sécurité. Il n'est pas nécessaire de saisir manuellement deux fois le code PIN.

Avantageusement, les moyens de sécurité sont agencés, lors de chaque connexion au réseau informatique, pour fournir aux moyens de connexion un mot de passe valide pour cette connexion.

Ainsi, lors de chaque connexion, le mot de passe valide pour cette connexion est transmis aux moyens de connexion directement par les moyens de sécurité, et non pas par l'intermédiaire de l'utilisateur. Celui-ci n'a donc plus besoin de saisir manuellement le mot de passe, dont l'affichage peut même être supprimé.

Avantageusement encore, il est prévu des moyens pour initialiser les moyens de sécurité auprès du serveur de sécurité, à travers le réseau cellulaire.

Dans l'art antérieur, il fallait déplacer la calculatrice auprès du serveur de sécurité, les relier l'un à l'autre par un lien généralement infrarouge et les synchroniser afin d'initialiser la calculatrice. Grâce à l'invention, on utilise la fonction radio du téléphone pour initialiser les moyens de sécurité à distance.

De préférence, les mots de passe peuvent être générés à partir de la date et de l'heure de la connexion et d'un code confidentiel mémorisé dans le téléphone.

Dans une forme de réalisation particulière, les moyens de connexion au réseau informatique sont intégrés dans le téléphone.

Dans une autre forme de réalisation, le téléphone comprend des moyens de liaison avec un terminal intégrant lesdits moyens de connexion au réseau informatique.

L'invention sera mieux comprise à l'aide de la description suivante de deux formes de réalisation de l'ensemble du téléphone et des moyens de connexion au réseau informatique de l'invention, en référence au dessin annexé sur lequel:
- la figure 1 représente un schéma bloc fonctionnel de l'ensemble, selon la première forme de réalisation et
- la figure 2 représente un schéma bloc fonctionnel de l'ensemble, selon la seconde forme de réalisation.

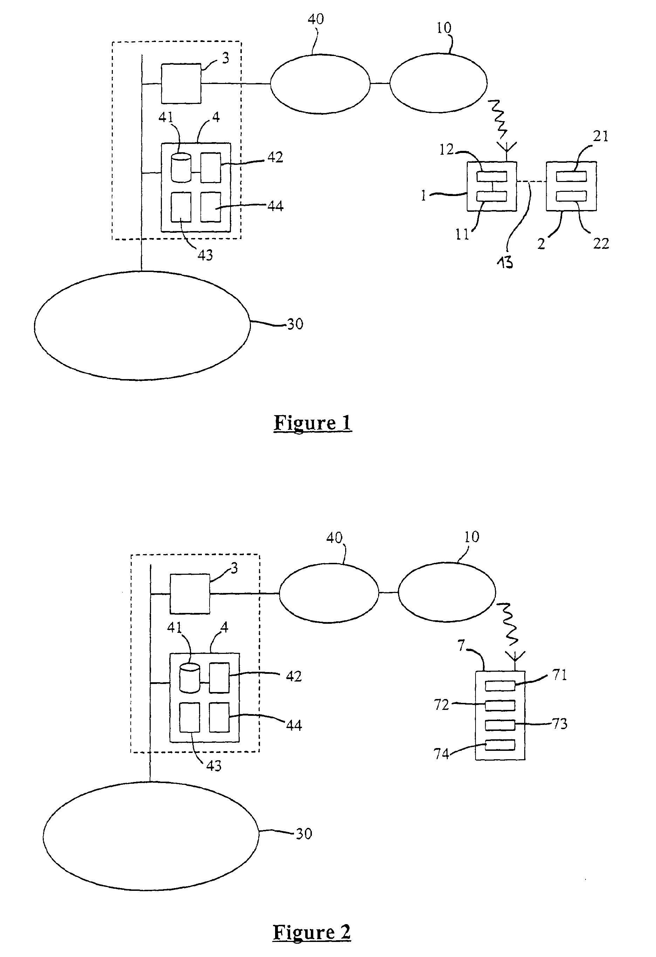

L'ensemble l'invention, représenté sur la figure 1, comprend un téléphone 1 d'un réseau cellulaire 10, ici GSM, et un bloc 21 de connexion à un réseau informatique, ici l'Internet 30, intégré dans un terminal de communication 2, en l'espèce un ordinateur portable. Le téléphone 1 et le terminal 2 comprennent chacun un connecteur infrarouge et une interface de données pour communiquer l'un avec l'autre, leur permettant d'établir entre eux une liaison infrarouge 13 de transmission de données.

Le terminal 2 dispose d'un accès à l'Internet 30, auprès d'un fournisseur 3 d'accès à l'Internet 30, et comprend le bloc 21 de connexion à l'Internet 30 et un navigateur Internet 22.

Le fournisseur d'accès 3 est relié à un réseau téléphonique 40, ici le réseau RTC et à un réseau informatique local, comprenant également un serveur de sécurité 4. Bien entendu, les réseaux téléphoniques GSM 10 et RTC 40 sont interconnectés. Le fournisseur d'accès 3 et le serveur de sécurité 4 sont connectés à une artère centrale du réseau local, elle-même connectée à l'Internet 30.

Le bloc de connexion Internet 21 comprend une application de connexion à l'Internet 30 permettant au terminal 2 de se connecter au fournisseur d'accès 3 à travers le réseau cellulaire 10, en exécutant un protocole de connexion téléphonique. Ce protocole comprend une étape d'authentification, au cours de laquelle le terminal 2 transmet à un serveur de sécurité 4, par l'intermédiaire du fournisseur d'accès 3, un identifiant et un mot de passe associé d'utilisateur. Le serveur de sécurité 4 vérifie ensuite la validité de ces données d'identification (identifiant et mot de passe) afin d'autoriser ou de refuser l'accès à l'Internet 30, comme cela sera explicité plus loin.

Le navigateur Internet 22 permet au terminal 2 de naviguer sur l'Internet 30, autrement dit de visiter des sites Web.

Le téléphone 1 comprend, outre les éléments classiques d'un téléphone cellulaire, un bloc de sécurité 11, destiné à générer différents mots de passe lors des différentes connexions du terminal 2 à l'Internet 30, et un bloc 12 d'initialisation du bloc de sécurité 11. Un code PIN d'identification, attribué au téléphone 1, est stocké dans une mémoire du téléphone 1, non représentée.

Le bloc de sécurité 11 est destiné, lors de chaque connexion à l'Internet 30, à générer un mot de passe, valide pour cette connexion, et à fournir ce mot de passe au bloc de connexion 21 du terminal 2, à travers la liaison 13. Le mot de passe, valide pour une connexion, est déterminé à partir de deux variables, ici la date et l'heure de la connexion, et d'un code confidentiel, mémorisé dans le téléphone 1, à l'aide d'un algorithme ici défini par le protocole RADIUS. Les mots de passe sont donc dynamiques, c'est-à-dire non fixes, et changent à chaque connexion à l'Internet 30.

Le bloc d'initialisation 12 est agencé pour initialiser le bloc de sécurité 11, sous la commande de l'utilisateur. L'initialisation consiste à synchroniser le bloc de sécurité 11 et le serveur de sécurité 4, de façon à ce que, lors de chaque connexion du terminal 2 à l'Internet 30, le serveur 4 reconnaisse le mot de passe, valide pour cette connexion, généré par le téléphone 1, comme cela sera explicité plus loin.

Le serveur de sécurité 4 est destiné à contrôler l'accès à l'Internet 30 d'un parc d'équipements d'utilisateur, comprenant notamment le terminal 2. Il comprend une base de données d'utilisateurs 41, un bloc 42 de gestion de la base de données 41, un bloc de sécurité 43 et un bloc de contrôle d'accès 44.

La base de données d'utilisateurs 41 contient, pour chaque utilisateur, un identifiant et éventuellement un code confidentiel associé. La base 41 contient notamment l'identifiant d'un utilisateur du terminal 2.

Le bloc de sécurité 43 est destiné, lors de chaque connexion d'un équipement d'utilisateur, à déterminer le mot de passe valide pour cette connexion, en mettant en oeuvre le même algorithme de génération de mots de passe que celui implémenté dans le téléphone 1.

Le bloc de contrôle d'accès 44, en coopération avec le bloc de sécurité 43, est destiné, lors de chaque connexion d'un équipement d'utilisateur, à vérifier la validité de l'identifiant et du mot de passe associé d'utilisateur, fournis par cet équipement.

Avant la première connexion du terminal 2 à l'Internet 30, il convient d'initialiser le bloc de sécurité 11, autrement dit de le synchroniser avec le serveur de sécurité 4. Pour cela, l'utilisateur saisit une commande d'initialisation, par sélection dans des menus de l'interface GUI (Graphical User Interface - Interface graphique d'utilisateur) du téléphone 1, en activant ainsi le bloc d'initialisation 12. Les étapes suivantes d'initialisation du bloc de sécurité 11 sont exécutées, de façon automatique, sous la commande du bloc d'initialisation 12.

Par le biais de son interface GUI, le téléphone 1 invite l'utilisateur à saisir son identifiant, connu du serveur de sécurité 4, et un code confidentiel, non encore connu du serveur de sécurité 4, à partir duquel les mots de passe de connexion seront générés. A l'aide du clavier du téléphone 1, l'utilisateur saisit alors son identifiant et le code confidentiel. Le code confidentiel est ensuite ici mémorisé dans le téléphone 1 pour les connexions ultérieures à l'Internet 30.

Le téléphone 1 appelle alors le fournisseur d'accès 3, à travers le réseau cellulaire 10, établit avec lui une communication téléphonique et envoie alors au serveur de sécurité 4, par l'intermédiaire du fournisseur d'accès 3, une requête d'initialisation, contenant l'identifiant et le code confidentiel d'utilisateur, saisis par l'utilisateur.

Sur réception de cette requête, le serveur de sécurité 4 recherche l'identifiant dans la base de données 41 et y mémorise le code confidentiel d'utilisateur, en l'associant à cet identifiant.

L'opération de connexion du terminal 2 à l'Internet 30 va maintenant être décrite.

Pour connecter le terminal 2 à l'Internet 30, un utilisateur active le téléphone 1, en appuyant sur une touche de mise en marche puis en saisissant le code PIN du téléphone 1, et met en marche le terminal 2. L'utilisateur relie ensuite le téléphone 1 et le terminal 2, par liaison infrarouge, et lance l'application (21) de connexion à l'Internet 30 sur le terminal 2. L'utilisateur saisit ensuite son identifiant dans le terminal 2 et commande la connexion du terminal 2 à l'Internet 30.

Le terminal 2 transmet alors au téléphone 1 une commande d'appel téléphonique du fournisseur d'accès 3, contenant le numéro d'appel téléphonique de celui-ci, avec une indication spécifiant qu'il s'agit d'un appel de connexion à l'Internet 30.

Le téléphone 1 appelle alors le fournisseur d'accès 3, à travers le réseau cellulaire 10, et établit avec lui une communication téléphonique.

Sur réception de l'indication spécifiant que l'appel est un appel de connexion à l'Internet 30, le bloc de sécurité 11 du téléphone 1 génère un mot de passe, valide pour la connexion, à partir de la date et de l'heure en cours et du code confidentiel d'utilisateur mémorisé dans le téléphone 1, et fournit ce mot de passe au bloc de connexion 21 du terminal 2.

Après établissement de la communication téléphonique entre le téléphone 1 et le fournisseur d'accès 3, le terminal 2 exécute un protocole de connexion téléphonique avec le fournisseur d'accès 3, par l'intermédiaire du téléphone 1. Ce protocole comprend une phase d'authentification, au cours de laquelle le terminal 2 transmet au serveur de sécurité 4, par l'intermédiaire du fournisseur d'accès 3, l'identifiant d'utilisateur et le mot de passe généré par le téléphone 1.

Sur réception de l'identifiant et du mot de passe associé, le serveur de sécurité 4 recherche l'identifiant dans la base de données 41, en extrait le code confidentiel associé, détermine le mot de passe valide pour cette connexion, à partir de la date, de l'heure et du code confidentiel, compare ce mot de passe à celui reçu et, en cas de correspondance, valide la connexion à l'Internet 30.

Dans la description qui précède, le téléphone 1 et le terminal 2 sont reliés par liaison infrarouge. Ils pourraient également être reliés par tout autre type de liaison sans fil ("bluetooth", DECT, etc.) ou par liaison filaire.

La seconde forme de réalisation de l'invention ne diffère de la forme de réalisation qui vient d'être décrite que par ce qui va maintenant être explicité.

Le téléphone 7, représenté sur la figure 2, est un téléphone du réseau cellulaire GSM 10, disposant d'un accès à l'Internet 30 auprès du fournisseur d'accès 3. Un code PIN d'identification est attribué au téléphone 7 et stocké dans une mémoire de celui-ci, non représentée.

Le téléphone 7 comprend, outre les éléments classiques d'un téléphone cellulaire, un bloc 71 de connexion à l'Internet 30, un navigateur Internet 72, un bloc de sécurité 73 et un bloc 74 d'initialisation du bloc de sécurité 73.

Le bloc de connexion Internet 71 permet au téléphone 7 de se connecter à l'Internet 30, à travers le réseau cellulaire 10, par l'intermédiaire du fournisseur 3 d'accès à l'Internet 30, en exécutant un protocole de connexion téléphonique. Ce protocole comprend une phase d'authentification au cours de laquelle le téléphone 7 fournit au serveur de sécurité 4, par l'intermédiaire du fournisseur d'accès 3, un identifiant et un mot de passe associé d'utilisateur.

Le bloc de sécurité 73 est destiné, lors de chaque connexion du téléphone 7 à l'Internet 30, à générer un mot de passe, valide pour cette connexion, et à fournir ce mot de passe au bloc de connexion 71. Le mot de passe, valable pour une connexion, est déterminé à partir de la date et de l'heure en cours et d'un code confidentiel, ici mémorisé dans le téléphone 7, à l'aide de l'algorithme défini par le protocole RADIUS.

Le bloc d'initialisation 74 est destiné à initialiser le bloc de sécurité 73, autrement dit à synchroniser le bloc de sécurité 73 et le serveur de sécurité 4, de façon à ce que, lors de chaque connexion du téléphone 7 à l'Internet 30, le serveur 4 reconnaisse le mot de passe valide pour cette connexion, généré par le téléphone 7.

Avant la première connexion du terminal 7 à l'Internet 30, il convient d'initialiser le bloc de sécurité 73. Pour cela, l'utilisateur active une commande d'initialisation, par sélection dans des menus de l'interface GUI du téléphone 7. Les étapes suivantes d'initialisation du bloc de sécurité 73 sont alors exécutées, de façon automatique, sous la commande du bloc d'initialisation 74.

Sur invitation du téléphone 7, l'utilisateur saisit alors son identifiant, connu du serveur de sécurité 4, et un code confidentiel, non encore connu du serveur de sécurité 4, à l'aide du clavier du téléphone 7. Le code confidentiel est mémorisé dans le téléphone 7 pour les connexions ultérieures à l'Internet 30. Le téléphone 7 appelle ensuite le fournisseur d'accès 3, à travers le réseau cellulaire 10, et, après établissement de la communication téléphonique, envoie au serveur de sécurité 4, par l'intermédiaire du fournisseur d'accès 3, une requête d'initialisation, contenant l'identifiant et le code confidentiel d'utilisateur saisis. Sur réception de cette requête, le serveur de sécurité 4 recherche l'identifiant dans la base de données 41 et y mémorise le code confidentiel d'utilisateur, en l'associant à cet identifiant.

L'opération de connexion du terminal 2 à l'Internet 30 va maintenant être décrite.

Après avoir mis en marche le téléphone 7, par appui sur une touche de mise en marche et saisie du code PIN, un utilisateur active une commande de connexion à l'Internet 30, ici en appuyant sur une touche Internet spécifique, et saisit son identifiant à l'aide du clavier du téléphone 7.

Sur activation de la commande de connexion à l'Internet 30, le téléphone 7 exécute de façon automatique les étapes, décrites ci-dessous, de connexion à l'Internet 30.

Sous la commande du bloc de connexion Internet 71, le téléphone 7 appelle le fournisseur 3 d'accès à l'Internet 30, à travers le réseau cellulaire 10, et établit avec lui une communication téléphonique.

Par ailleurs, le bloc de sécurité 73 génère un mot de passe, valable pour la connexion en cours, et le fournit au bloc de connexion 71.

Après établissement de la communication entre le fournisseur d'accès 3 et le téléphone 7, le téléphone 7 exécute le protocole de connexion téléphonique à l'Internet 30, sous la commande du bloc de connexion 71. Au cours de la phase d'authentification de ce protocole, le téléphone 7 transmet au serveur de sécurité 4, par l'intermédiaire du fournisseur d'accès 3, l'identifiant d'utilisateur et le mot de passe valable pour cette connexion.

Sur réception de l'identifiant et du mot de passe associé, le serveur de sécurité 4 recherche l'identifiant dans la base de données 41, en extrait le code confidentiel associé, détermine le mot de passe valide pour cette connexion, à partir de la date, de l'heure et du code confidentiel, compare ce mot de passe à celui reçu et, en cas de correspondance, valide la connexion à l'Internet 30.

Dans la description qui précède, l'utilisateur du terminal 2, ou du téléphone 7, saisit son identifiant à chaque connexion à l'Internet 30. En variante, il pourrait saisir son identifiant lors d'une connexion à l'Internet 30 et le mémoriser pour les connexions suivantes.

On soulignera que le mot de passe, généré par le téléphone 1, ou 7, lors de chaque connexion à l'Internet 30, n'est pas affiché mais directement fourni au bloc de connexion Internet intégré dans le téléphone 7, ou dans le terminal 2.

On notera également que l'initialisation du bloc de sécurité 11 (73) du téléphone 1 (7) auprès du serveur de sécurité 4 s'effectue à distance, à travers le réseau cellulaire 10, en utilisant la fonction de téléphonie radio du téléphone 1 (7).

Le mot de passe pourrait être formé à partir d'une ou de plusieurs variables, autres que la date et l'heure, et d'un code confidentiel. La variable pourrait par exemple être un nombre, incrémenté à chaque connexion du terminal 2, ou du téléphone 7, à l'Internet 30.

Au lieu de générer un mot de passe différent à chaque connexion à l'Internet 30, le bloc de sécurité du terminal 2, ou du téléphone 7, pourrait générer un mot de passe différent toutes les "x" connexions, "x" pouvant être fixe ou variable.

Dans la description qui précède, lors de l'initialisation du bloc de sécurité du téléphone, l'utilisateur saisit un code confidentiel qui est ensuite mémorisé dans le téléphone.

Dans une variante de réalisation, ce code confidentiel pourrait être saisi par l'utilisateur, lors de chaque connexion à l'Internet.

Dans une autre variante de réalisation, le code confidentiel pourrait être mémorisé dans le téléphone, lors de sa fabrication. Dans ce cas, le code confidentiel pourrait être mémorisé dans le serveur de sécurité, avec l'identifiant d'utilisateur associé, sans aucune intervention du téléphone.

Au lieu d'être séparés, le serveur de sécurité 4 et le serveur 3 fournisseur d'accès à l'Internet 30 pourraient être intégrés dans un même serveur.

Le terminal 2 et le téléphone 7 pourraient comprendre une application de messagerie électronique Internet.

L'invention pourrait s'appliquer à tout réseau informatique, autre que l'Internet.

## Revendications

1. Ensemble d'un téléphone (1; 7) d'un réseau cellulaire (10) et de moyens (21 ; 71) de connexion téléphonique à un réseau informatique (30), destinés, lors de chaque connexion au réseau informatique (30), à fournir à un serveur de sécurité (4) un identifiant et un mot de passe associé, **caractérisé par le fait que** le téléphone (1; 7) comprend des moyens de sécurité (11 ; 73) agencés pour générer différents mots de passe, lors de différentes connexions au réseau informatique (30) à partir d'au moins une variable et d'un code confidentiel.

2. Ensemble selon la revendication 1 dans lequel les moyens de sécurité (11 ; 73) sont agencés, lors de chaque connexion au réseau informatique (30), pour fournir aux moyens de connexion (21 ; 71) un mot de passe, valide pour cette connexion.

3. Ensemble selon l'une des revendications 1 et 2 dans lequel il est prévu des moyens (12 ; 74) pour initialiser les moyens de sécurité (11 ; 73) auprès du serveur de sécurité (4), à travers le réseau cellulaire (10).

4. Ensemble selon la revendication 1 dans lequel les moyens de sécurité (11 ; 73) sont agencés, lors de chaque connexion au réseau informatique (30), pour générer un mot de passe à partir de la date et de l'heure de la connexion et d'un code confidentiel mémorisé dans le téléphone (1 ; 7).

5. Ensemble selon l'une des revendications 1 à 4 dans lequel les moyens (11) de connexion au réseau informatique (30) sont intégrés dans le téléphone (1).

6. Ensemble selon l'une des revendications 1 à 5 dans lequel le téléphone (7) comprend des moyens de liaison avec un terminal (2) intégrant lesdits moyens (73) de connexion au réseau informatique (30).
